# EUROPEAN PATENT SPECIFICATION

(11) **EP 4 522 457 B1**
(45) Date of publication and mention of the grant of the patent: **09.09.2026**
(21) Application number: 23724677.2
(22) Date of filing: 28.04.2023
(51) Int. Cl.: B60R 5/04

(54) **A SPACE DIVIDING APPARATUS FOR A VEHICLE**
VORRICHTUNG ZUR RAUMTEILUNG FÜR EIN FAHRZEUG
SYSTÈME DE DIVISION D'ESPACE POUR UN VÉHICULE

(30) Priority: 09.05.2022 GB 202206741
(43) Date of publication of application: 19.03.2025
(73) Proprietor: Jaguar Land Rover Limited, Coventry, Warwickshire CV3 4LF (GB)
(72) Inventor: COOK, Benjamin Samuel, Coventry Warwickshire CV3 4LF (GB); ATKINSON, Matthew, Coventry Warwickshire CV3 4LF (GB); JOHNSON, Eilidh, Coventry Warwickshire CV3 4LF (GB); WARBURTON, David, Coventry Warwickshire CV3 4LF (GB)
(74) Representative: Jaguar Land Rover Patents Department
(86) International application number: PCT/EP2023/061356
(87) International publication number: WO 2023/217562

(56) References cited:
- DE-U1- 202007 017 955
- US-A1- 2005 087 530
- US-A1- 2017 129 410

## Description

### TECHNICAL FIELD

The present disclosure relates to a space dividing apparatus. In particular, but not exclusively, the present disclosure relates to a space dividing apparatus for a vehicle. Aspects of the invention relate to a space dividing apparatus, a load floor unit and to a vehicle.

### BACKGROUND

Space dividing apparatuses in vehicles and the like can often be configured in more than one position or configuration. Examples are shown in documents US 2017/129410 A1 and US 2005/087530A1.

Document US 2017/129410 A1 discloses a foldable holding device that is provided in a floorboard. The foldable holding device includes: a housing recess; a raisable top panel that fits into the housing recess while the raisable top panel is housed; a side panel foldably connected to one of side edges of the raisable top panel such that as the raisable top panel is raised, the side panel outwardly moves to form the foldable holding device in an open state; first and second holding sub-members respectively provided in the housing recess and at a position located directly adjacent to a lower edge of the side panel. The first and second holding sub-members are configured to maintain a raised position of the side panel by engaging the first holding sub-members and the second holding sub-members to each other.

Further examples include load floors and shelves. Support members, for example gas struts, are often used to support the components in a user-desired position or configuration but known support members can use valuable packaging space and can be expensive to manufacture.

The present invention provides an improved space dividing apparatus.

### SUMMARY OF THE INVENTION

It is an aim of the present invention to address one or more of the disadvantages associated with the prior art. Aspects and embodiments of the invention provide a space dividing apparatus, a load floor unit and a vehicle as claimed in the appended claims.

Throughout the summary of the invention, description and claims the terms front, rear, upper and lower are defined with reference to their normal use in the description of a forward facing upright standing vehicle. It follows that features of the invention are described in relation to a vehicle such that, for example, front features are those closer to the front of the vehicle than rear features and upper features are those closer to the top of the vehicle than lower features.

According to an aspect of the invention there is provide a space dividing apparatus arranged to move between a stowed position and a deployed position relative to a base, the space dividing apparatus comprising a partition body and at least one support member, the support member comprising: a first support element having a first support element plane; a second support element having a second support element plane; and a support hinge arranged to hingeably couple the first and second support elements and having a support hinge axis, wherein the support member is hingeable between: a deployed condition in which the first support element plane and the second support element plane are each substantially parallel with a first plane; and a stowed condition in which the first support element plane and the second support element plane are each substantially parallel with a second plane, wherein the second plane is orthogonal to the first plane, and wherein in the stowed position the at least one support member is in the stowed condition and in the deployed position the at least one support member is in the deployed condition.

The space dividing apparatus comprises a release button configured to initiate movement of the support member from the deployed condition towards the stowed condition.

The release button is movable along a button axis and the button comprises a button ramp having a ramp surface; and the second support element comprises a support ramp having a ramp surface, wherein in the deployed position the button ramp is aligned with and opposes the support ramp such that movement of the button along the button axis causes the ramp surface of the button ramp to engage with the ramp surface of the support ramp to urge the second support element away from the button axis and away from the deployed condition.

The release button may be biased towards a presented condition. In an embodiment the release button comprises a catch and the second support element comprises a ledge, and in the deployed condition the catch of the release mechanism is biased against the ledge. Optionally in the stowed position the support ramp is out of alignment with the button ramp.

In an embodiment, the partition body comprises a track arranged to house the release. Optionally the partition body comprises ends and the track is provided by the ends.

In an embodiment the release button is configured to releasably latch the space dividing apparatus in the stowed position.

Optionally the space dividing apparatus comprises a base. The at least one support member may be coupled to the base. In an embodiment the release button comprises a button latching ramp configured to engage with a base latching ramp, wherein the button is biased so that the button latching ramp and the base latching ramp are engaged in the stowed position.

In an embodiment the space dividing apparatus forms a vehicle loadspace partition. In an embodiment the space dividing apparatus forms a shelf.

According to an aspect of the invention there is provided a load floor unit comprising a space dividing apparatus as hereinbefore defined.

According to an aspect of the invention there is provided a vehicle comprising a space dividing apparatus as hereinbefore defined.

### BRIEF DESCRIPTION OF THE DRAWINGS

Embodiments of the invention will now be described, by way of example only, with reference to the accompanying drawings, in which:
Figure 1 is a perspective view of a deployed support member in accordance with an embodiment of the invention;
Figure 2 is an orthographic view of a stowed support member in accordance with an embodiment of the invention;
Figure 2a is a cross section through the support member shown in figure 2;
Figure 3 is a perspective view of a part-deployed support member in accordance with an embodiment of the invention;
Figure 3a is a section view of the support member shown in figure 3;
Figure 4 is an orthographic exploded view of a support member in accordance with an embodiment of the invention;
Figure 5 is an orthographic view of a first support element of a support member in accordance with an embodiment of the invention;
Figure 6 is a sectioned perspective view of a stowed support member in accordance with an embodiment of the invention;
Figure 7 is a perspective view of a deployed space dividing apparatus in accordance with an embodiment of the invention;
Figure 8 is a perspective view of a stowed space dividing apparatus in accordance with an embodiment of the invention;
Figure 9 is a perspective view of a part-deployed space dividing apparatus in accordance with an embodiment of the invention;
Figures 10 to 13 are perspective views of sections of a space dividing apparatus in accordance with an embodiment of the invention;
Figure 14(a to d) schematically show the operation of a release button of a space dividing apparatus in accordance with an embodiment of the invention;
Figure 15 is a perspective view of a section of a space dividing apparatus in accordance with an embodiment of the invention; and
Figure 16 is a vehicle in accordance with an embodiment of the invention.

### DETAILED DESCRIPTION

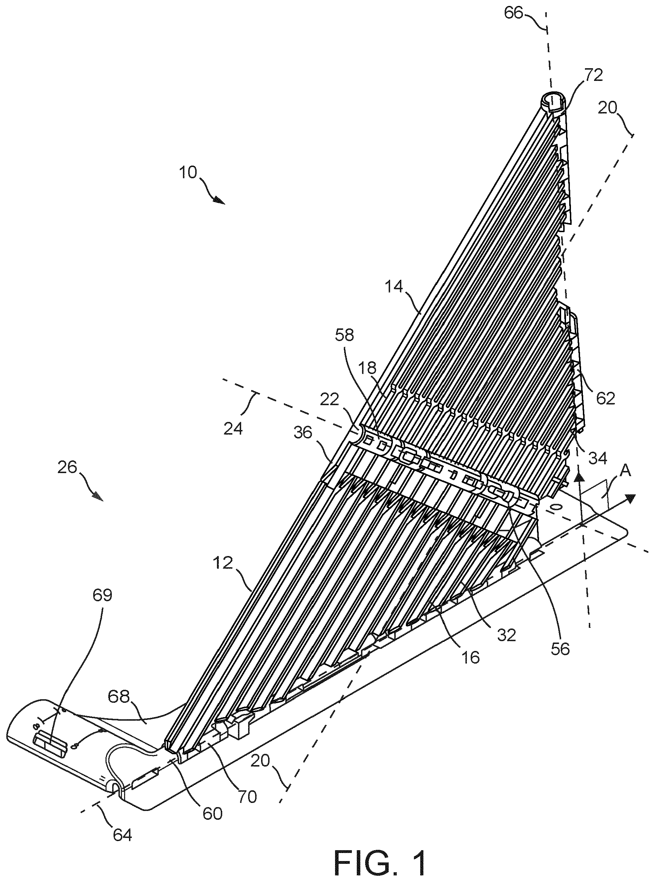

Figures 1 to 3 show a support member 10 in accordance with an embodiment of the invention. The support member comprises a first support element 12 and a second support element 14. In the embodiment shown, the first and second support elements are substantially triangular, or wing shaped. The first support element 12 comprises at least one first support strengthening rib 16. The second support element 14 comprises at least one second support strengthening rib 18. In the embodiment of figures 1 to 3, each strengthening rib 16, 18 is a straight non-curved rib having a rib axis 20. Each rib or rib axis is parallel to that of other ribs. In the embodiment shown all of the rib axes 20 are substantially parallel. It will be appreciated that other non-straight rib shapes are within the scope of the invention.

Each of the first support element and second support element are substantially planar components so can be described to have a first support element plane and a second support element plane respectively. It will be appreciated that this holds in embodiments where the first and second support elements do not comprise strengthening ribs.

The first and second support elements are coupled together via a support hinge 22 having a hinge axis 24 about which the support elements can rotate relative to each other. In the example embodiment, the hinge axis 24 is orthogonal to the rib axes 20. Other relationships may be useful.

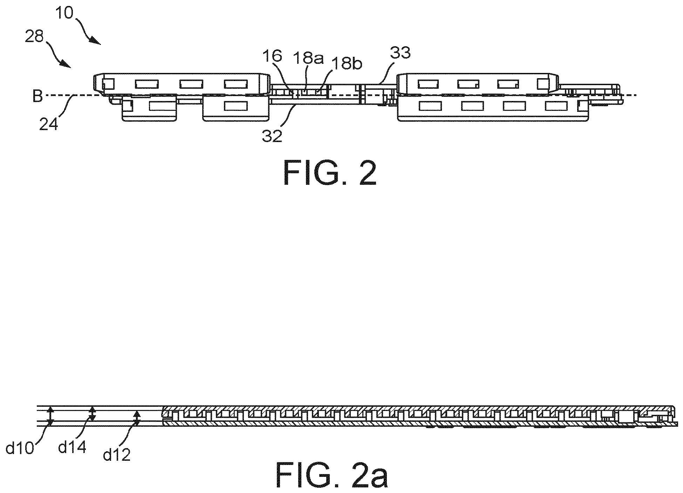

The support hinge 22 permits the support member 10 to hinge between a deployed condition 26 as shown in figure 1 and a stowed condition 28 as shown in figure 2 and described below. In the deployed condition each first support strengthening rib 16 is substantially coplanar in a first plane with each second support strengthening rib 18. Put another way at least a portion of the ribs are substantially coplanar. The first plane is illustrated in figure 1 by the symbol A. In the deployed condition, axes 24, 64 and 66 each run within the first plane, while axes 64 and 66 are substantially orthogonal.

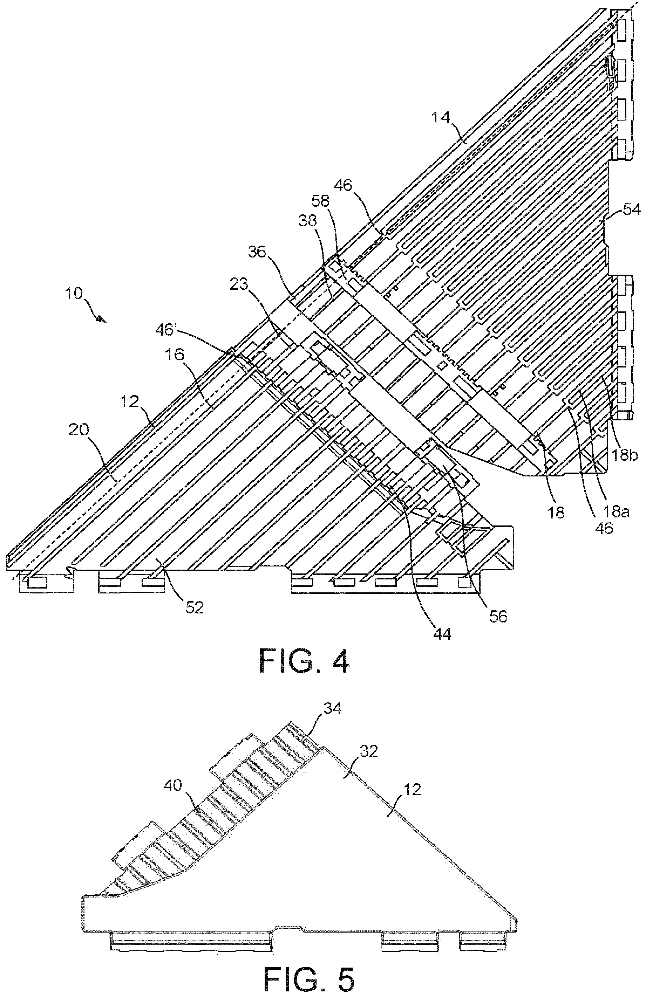

Figure 4 shows the deployed support member 10 of figure 1 in exploded form. Figure 5 shows the first support element 12 from an opposing view to that shown in figure 4. The first support element comprises a first surface 32 having a recess portion 34. The second support element 14 comprises a first surface 33 and a corresponding overlap portion 36. With reference back to figure 1, the overlap portion 36 is arranged to locate in the recess portion 34 of the first support element 12 when the support apparatus is in the deployed condition 26. This is advantageous in that the overlap portion prevents the support apparatus from rotating beyond the deployed condition with respect to movement from the stowed condition as will be discussed.

One or more overlap ribs 38 are provided on the overlap portion 36. This strengthens the overlap portion and provides engagement with the recess portion as will be discussed. The presence of overlap ribs 38 is advantageous when moulding the second support element. That is to say a flat surface without ribs may present manufacturing challenges when using moulding processes.

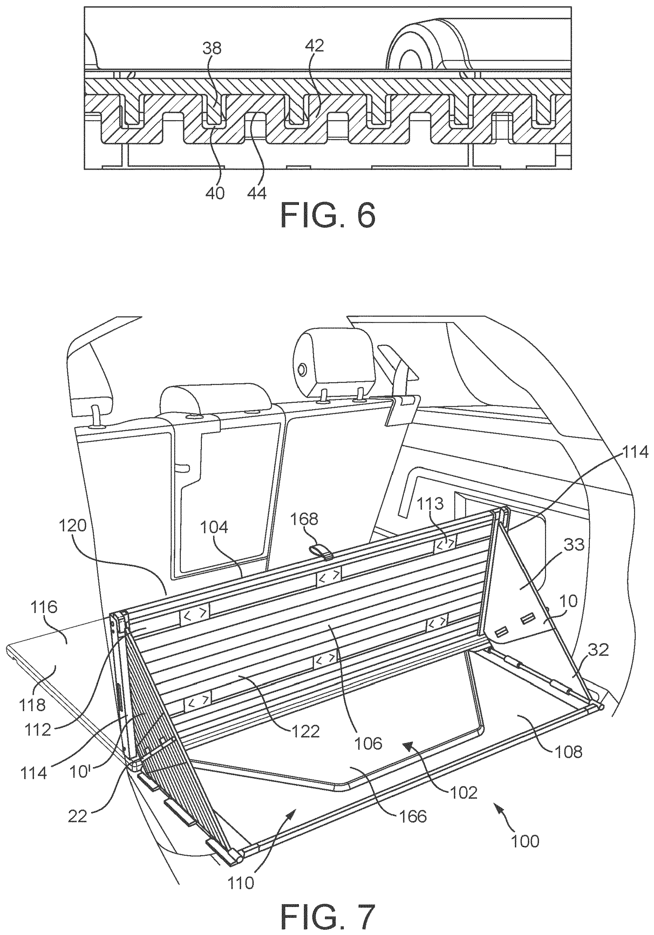

As shown in figure 5, the recess portion 34 of the first support 12 comprises recess slots 40 which, in the deployed condition 26, accept the overlap ribs 38 of the second support element. The recess slots 40 are formed by a double castellation 42 (illustrated in figure 6) which also provides stowage slots 44 which, in the stowed condition 28, accept the strengthening ribs 18 of the second support element 14. Specifically, the stowage slots 44 accept an unbifurcated portion of the strengthening ribs 18 as will be described.

Referring to figure 4, to maximise the strength of the support member 10, each second support strengthening rib 18 is configured, in some embodiments, to bifurcate into parallel ribs 18a and 18b at a point 46 substantially equal in distance from the support hinge 22 to the distance from the support hinge 22 to a point 46' where the double castellation 42 transitions into the first support element strengthening ribs 16. This means, when stowed, the bifurcated second support strengthening ribs 18a and 18b do not collide with the double castellation 42.

Figure 2 shows the support member 10 in the stowed condition 28. In this condition the first support strengthening rib 16 is shown to be spaced from and substantially coplanar in a second plane with the second support strengthening rib 18 (bifurcated as 18a and 18b). Put another way, at least a portion of the ribs are substantially coplanar. In the stowed condition 28 the rib axes are again substantially parallel (rib axes not shown in the figure as orthogonal to the plane of the figure).

It will be appreciated that during transition of the first and second support elements 12, 14 from or to the deployed condition 26 to or from the stowed condition 28 through rotation about the hinge, the rib axes 20 of the strengthening ribs 16, 18 of the first and second elements lose their parallelism.

The second plane is illustrated in figure 2 by symbol B and is orthogonal to the page showing figure 2. The second plane comprises hinge axis 24. It will be understood that relative to a fixed point outside the support member 10 and with no other rotation, the second plane B is orthogonal to the first plane A discussed in relation to the deployed condition 26.

As mentioned, the ribs 16, 18 are arranged on the first and second support elements so that in the stowed condition the ribs interlace. It will be appreciated that where other arrangements of ribs are used within the scope of the invention, it follows that the ribs can be configured to not interlace. However, it remains advantageous for at least a portion of the ribs to be coplanar in the stowed condition for effective collapse of the support member to a depth d10 which is less than the sum of the depths d12, d14 of each of the first and second support elements respectively. This is illustrated in figure 2a.

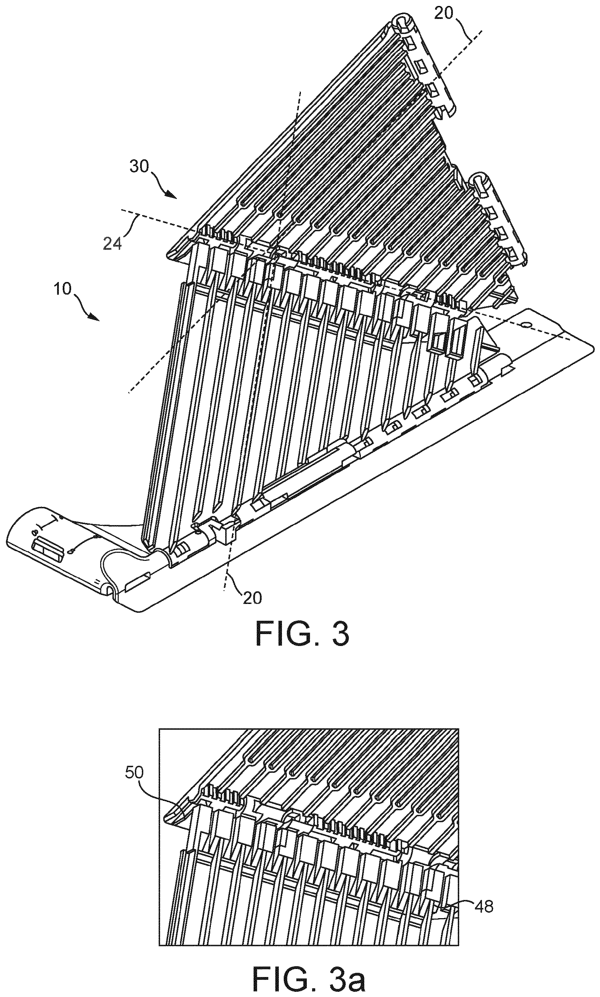

Figure 3 shows the support member in a part deployed condition 30 being at a point between the stowed condition 28 and deployed condition 26. The figure shows the aforementioned loss of parallelism of the rib axes 20 of the strengthening ribs 16, 18 of the first and second elements in the part deployed condition 30. It will be appreciated that in the embodiments shown in figures 1 to 3, each rib axis 20 remains orthogonal to the hinge axis 24 at all times.

Figure 3a shows a section of figure 3. The aforementioned transition between the double castellation 42 and the first support strengthening ribs 16 comprises a sloped region 48. This is advantageous during manufacture of the support element to facilitate release from tooling. A corresponding shaping 50 of the overlap ribs 38 is provided to ensure maximum engagement with the double castellation 42 when in the deployed condition 26.

Figures 1 to 3 also show the first support element 12 comprising a second surface 52 wherein the at least one first support strengthening rib 16 is arranged on the second surface. Similarly, the second support element 14 comprises a second surface 54 wherein the at least one second support strengthening rib 18 is arranged on the second surface. As the support member transitions from the deployed condition 26 to the stowed condition 28, the first and second surfaces 52, 54 come into facing each other. The provision of the strengthening ribs on the second surfaces allows for reinforcement of the first and second support elements while allowing for an effective collapse of the support apparatus to the depth d10 as hereinbefore described.

The support hinge 22 coupling the first and second elements is a barrel hinge and comprises a first barrel 56 a second barrel 58 and a pin (not shown because the pin is inside the first and second barrels once assembled, or put another way the pin couples the barrels so is substantially contained therein). In the embodiment shown the first support element 12 comprises the first barrel 56 and the second support element 14 comprises the second barrel 58. Other arrangements may be useful, for example in the embodiment shown, the first support element comprises two or more first barrels and the second support comprises two or more second barrels. In examples of the invention the first support element comprising the first barrel is integrally formed, for example from a single shot moulding operation. Similarly, the second support element comprising the second barrel can be integrally formed, for example from a single shot moulding operation. Other arrangements may be useful. The pin couples the first barrel to the second barrel and is coaxial with the hinge axis 24.

In example embodiments the support member comprises a first coupling hinge 60 suitable for coupling the first support element 12 to a first component and a second coupling hinge 62 suitable for coupling the second support element 14 to a second component as will be described below. It will be understood that the couplings mentioned can be direct or indirect. The first coupling hinge has a hinge axis 64 arranged at forty-five degrees to the hinge axis 24 of the support hinge 22. Similarly, the second coupling has a hinge axis 66 arranged at forty-five degrees to the hinge axis 24 of the support hinge 22. The skilled person will understand that in the deployed condition the hinge axis 64 of the first coupling hinge is substantially orthogonal to the hinge axis 66 of the second coupling hinge and in the stowed condition the hinge axis 64 of the first coupling hinge 60 is substantially parallel to the hinge axis 66 of the second coupling hinge 62.

In the embodiment shown the support member 10 comprises a first coupling portion 68 coupled to the first support element through the first coupling hinge 60. The first coupling portion may be referred to as a base and is suitable for coupling the support member 10 to the first component as mentioned above. Similarly, the support apparatus may comprise a second coupling portion (not shown) coupled to the second support element through the second coupling hinge 62. In some embodiments the second coupling portion is suitable for coupling the support member to the second component. It will be appreciated that within the scope of the invention, some embodiments do not comprise the first and/or second portion and instead the support member couples directly to the first and/or second component.

The first and second coupling hinges are barrel hinges, each comprising a first barrel, a second barrel and a pin. In the embodiment shown the first support element 12 comprises the first barrel 70 of the first coupling hinge 60 and the second support element 14 comprises the first barrel 72 of the second coupling hinge 62. Each first barrel and respective support element may be integrally formed using, for example, single shot moulding as described above in relation to the support hinge.

In embodiments of the invention a support biasing means, for example a spring, is provided to generate a bias force to rotationally urge the support member 10 towards the deployed condition. The embodiment shown uses a torsion spring disposed within the support hinge 22 to urge the first and second elements 12, 14 to rotate from each other towards the deployed condition 26. Other arrangements may be useful. In the deployed condition 26 the support biasing means biases the support apparatus to hold it in the deployed condition. As hereinbefore mentioned, the overlap portion 36 prevents over-rotation of the support member beyond the deployed condition with respect to the stowed condition. A force greater than the bias force provided by the biasing means is therefore required to move the support apparatus from the deployed condition 26 towards the stowed condition 28. It will be understood that the force greater than the bias force must be applied in a direction which opposes the bias force. For example, a force greater than the bias force applied in the first plane A will not result in rotation toward the stowed condition. This is useful in applications where the support member supports a space dividing apparatus because movement of items against the apparatus will not result in stowing of the support member.

Figures 7 to 9 show a space dividing apparatus 100 for a vehicle loadspace 102 comprising a partition body 104 and two support members 10, 10' as hereinbefore described. It will be understood that the two support members 10, 10' are mirror images of each other relative to a centre point 106 of the partition body. This permits the support members to each fold in towards the centre of the loadspace 102 as will be described. It will also be appreciated that the support members forming part of the space dividing apparatus do not comprise first support and second support strengthening ribs in all embodiments of the invention. That is to say that some embodiments feature all aspects of the above-described support apparatus excluding the first and second support strengthening ribs. The skilled person will appreciate that the below description can be applied to embodiments both comprising and excluding the first and second support strengthening ribs.

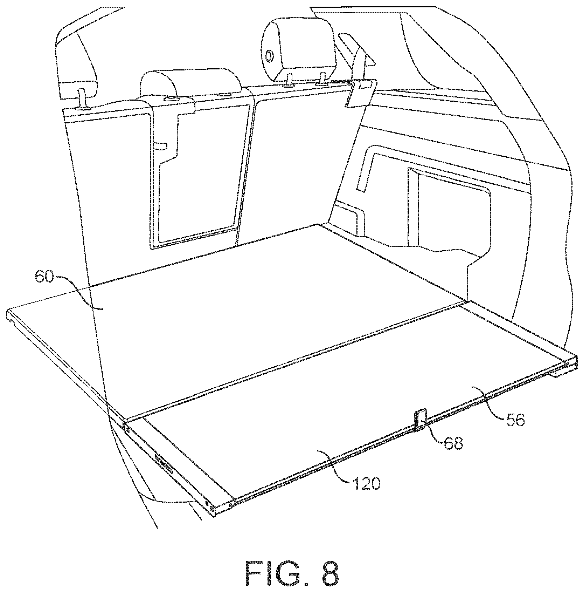

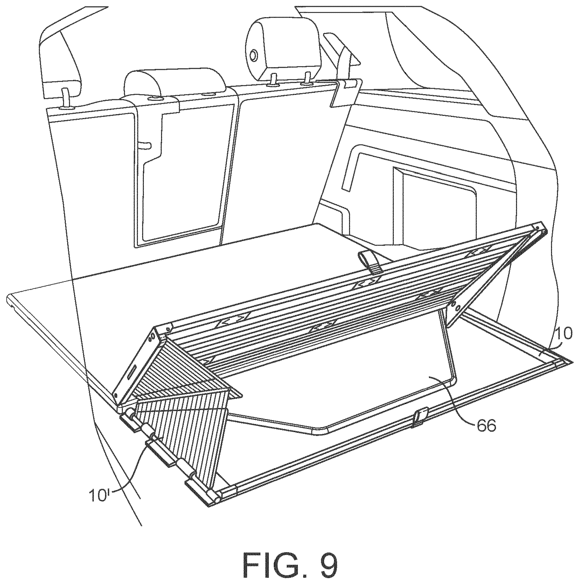

The space dividing apparatus 100 shown forms a vehicle loadspace storage solution. Other arrangements, for example, to provide a deployable shelf or table or the like are within the scope of the invention. The space dividing apparatus is arranged to move between a stowed position (figure 7) and a deployed position (figure 8) relative to a base 108. In the stowed position (figure 8) the one or more support members 10, 10' are in the stowed condition 28 and in the deployed position (figure 7) the one or more support members 10, 10' are in the deployed condition 26. Figure 9 illustrates a part deployed position of the space dividing apparatus in which the support members 10, 10' are in the part deployed condition 30.

In the deployed position, the space dividing apparatus provides a storage volume 110 defined as the volume within the partition body 104 and the two support members 10, 10'. This advantageously divides the vehicle loadspace 102 so that items which fit within the storage volume 110 can be retained and held closer to the loadspace entry (typically known as the tailgate of the vehicle) for easy removal. The partition body 104 can be used in the deployed configuration to provide flexible storage solutions 112 that are sometimes but not always wanted by users of the vehicle. In the example where the space dividing apparatus provides a shelf or table or the like, the space dividing apparatus is installed orthogonally to arrangement shown in figure 7. Here in the deployed configuration, the partition body provides the shelf or table or the like. It will be appreciated that items could be suspended from the shelf or table or the like in the storage volume which, in this example configuration, lies underneath the partition body.

The first surface 32 of the first support element and the first surface 33 of the second support element are arranged to face the centre of the loadspace 102. Advantageously the first surfaces are smooth, i.e. do not comprise ribs, and thus provide a surface that does not snag items placed in the storage volume 110. Furthermore, the positioning of the support member means that the support hinge 22 faces away from the centre of the storage volume. This reduces the likelihood that items will catch on the support hinge. The arrangement also allows the support member 10 to collapse towards the centre of the loadspace 102 meaning that the support member can be placed at or near to ends 114 of the partition body 104, or put another way at the extremity of the loadspace, to maximise storage area.

In some embodiments, a load floor unit 116 comprises the base 108. A load floor section 118 is provided adjacent the base 108. In some embodiments the base and the load floor section are integral, thus advantageously reducing part count to provide a floor for the loadspace 102. In other embodiments the base 108 may be attached to the load floor section. In either configuration it will be understood that the load floor unit 116 is removable for users of the vehicle to access sub-floor areas where for example a spare wheel for the vehicle may be stored. In examples of the invention, reversible snap fittings are used to fix the base and/or the load floor section to a scuff plate and/or body in white of the vehicle. This allows the user to remove and reattach the space dividing apparatus from and to the vehicle. Examples of the reversible snap fittings include ball clips. Other fittings may be useful.

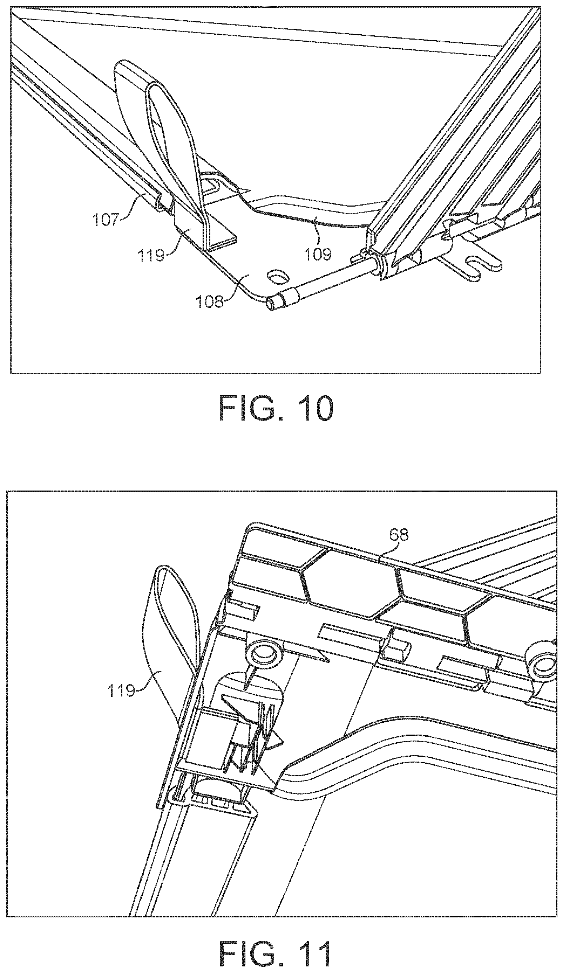

Removal of the space dividing apparatus is, in some examples, facilitated by one or more base straps 119 shown in figure 10. The base strap is optionally fixed to the base 108 using, for example, an adhesive. In embodiments the base strap is not fixed to the base but remains proximal thereto. Figure 10 shows the base strap with the first coupling portion 68 removed. In this embodiment the base strap is held through compression of the first coupling portion 68 against the base 108. Figure 11 shows the underside of the first coupling portion. Fixing of the first coupling portion to the base retains the base strap 119. The base strap passes through a strap aperture 69 (shown in figure 1) in the first coupling portion 68.

Figure 10 also illustrates an embodiment in which the space dividing apparatus comprises a base cover 109. The base cover comprises, in examples of the invention, a non-slip material to aid the retention of items stored in the storage volume. In one example the base cover 109 is made from rubber. Other materials may be useful. The fixing of the first coupling portion to the base 108 acts to clamp the base cover in place. In some examples the space dividing apparatus comprises a base lip 107 proximal to the loadspace opening in use. The base lip advantageously acts to create a tray with the first coupling portion and load floor section. This can be a benefit to, for example, retain liquids if they are spilled in the storage volume. In an example, the base lip is made from a material that has some flexibility so that the partition body slightly compresses the base lip in the stowed position. This acts to prevent the partition body from vibrating in the stowed position and creating unwanted noise.

As shown in figures 7 to 9, the partition body 104 comprises a board, which may be formed from an extrusion or the like. The partition body has a material surface 120 and a function surface 122. The material surface can comprise a carpet, for example, to match the adjacent load floor section 118. The function surface is presented to a user of the space dividing apparatus when in the deployed position. In some embodiments of the invention, the function surface comprises elasticated straps 112 arranged to advantageously retain goods positioned against the function surface. One or more elastic strap tensioner 113 is provided to section the elasticated strap. In some embodiments each strap tensioner 113 is moveable across the function surface to advantageously permit a user to tailor the available elasticated strap size, for example to retain either a flask, a football, a frisbee, a spade, a tent, and the like.

It will be understood that throughout the following description, reference to the support member is applicable to either or both of the support members 10, 10' forming part of the space dividing apparatus. For ease of description, however, only one support member in the space dividing apparatus is described.

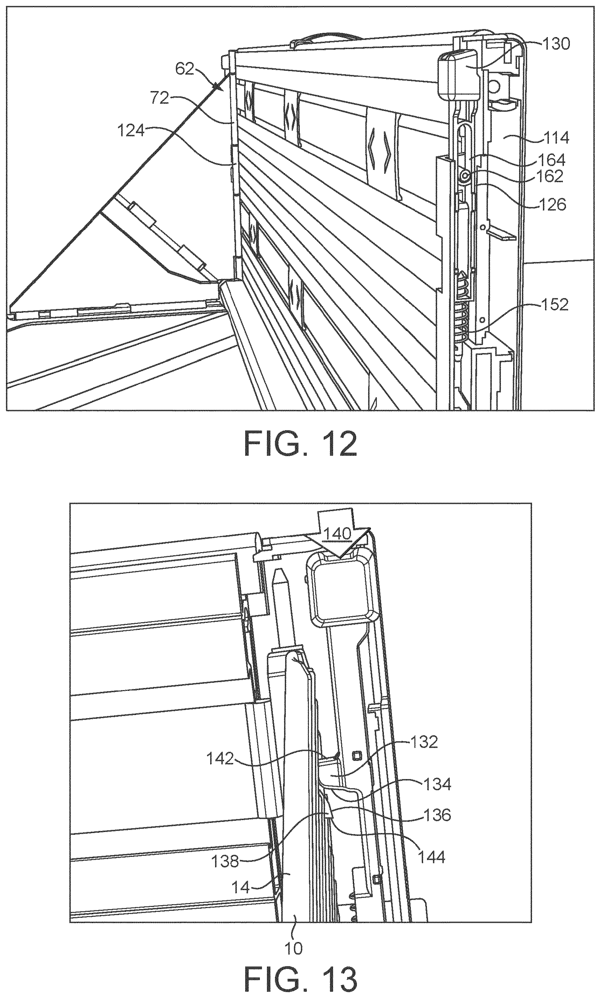

Ends 114 of the partition body 104 can be integrally formed with or attached to the partition body. In the example shown the ends 114 are formed separate to the partition body and then fixed thereto. With reference to figure 12, each end 114 comprises second barrels 124 arranged to couple with the first barrel 72 of the second element 14 of the support member 10 to form the second coupling hinge 62. In embodiments of the invention, the ends 114 comprise a track 126 in which a release button 130 is slidably housed. The release button is used to aid the user in overcoming the bias force of the support member.

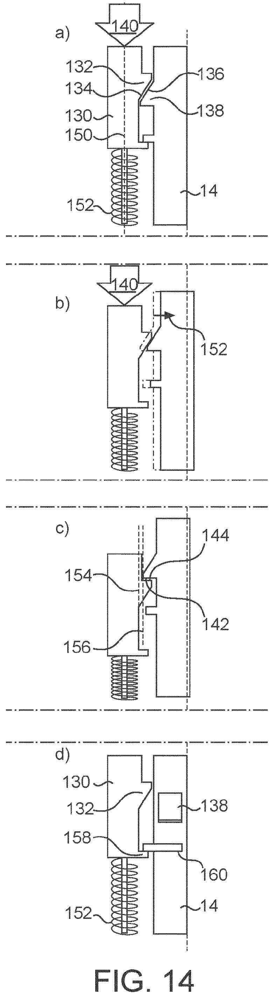

Shown in figure 13, the release button 130 comprises a first button ramp 132 having a ramp surface 134 configured to engage with a ramp surface 136 of a support ramp 138 provided as part of examples of the support member 10. Application of force to the release button in the direction indicated by arrow 140 causes the ramp surfaces 134 and 136 to engage. As the release button is held in the track 126, the engagement causes the support member 10, or more specifically the second element 14 of the support member, to rotate away from the deployed condition and from the release button as the bias force is overcome. This results in movement of the support member from the deployed condition. In some embodiments of the invention, continued or further depression of the button results in the ramp surfaces being overcome. Movement back towards the deployed condition is promoted by the bias force but is in some embodiments prevented by ramp edges 142, 144 which become proximal after the ramp surfaces are overcome. The support member is thus held in a part deployed condition. This means that force applied in the A plane (reference made to figure 1 and supporting description) results in a component of that force acting against the bias force thus leading to further rotation of the support member toward the stowed condition. The movement of the release button and the effects thereof is described further with reference to schematic figures 14a to 14d.

As described in the foregoing, the release button is configured to initiate movement of the support member from the deployed condition towards the stowed condition. This is shown schematically in figure 14 in which, four stages of are shown in subfigures a) to d).

In an example embodiment, the release button 130 is movable along a button axis 150. The button is biased towards a presented condition by a button bias provided by, for example, a button spring 152. When the space dividing apparatus is in the deployed position, the button ramp 132 is aligned with and opposes the support ramp 138, as shown in figure 14a. As will be explained, movement or depression of the button 130 along the button axis 150 causes the ramp surface 134 of the button ramp to engage with the ramp surface 136 of the support ramp and urges the second support element away from the button axis 150 and away from the deployed condition.

Figure 14a shows the button 130 and a portion of the second support element 14 when the space dividing apparatus is in the deployed position as mentioned above. The button is in a presented condition. The ramp surface 134 of the button ramp 132 faces or is in contact with the ramp surface 136 of the support ramp 138. As the button is depressed (figure 14a through 14b), for example by a user using their thumb, in the direction indicated by arrow 140, the ramp surfaces 134, 136 engage one another and the second support element 14 is urged away, shown by arrow 152, from the button 130. This has the effect of overcoming the bias force provided by the biasing means of the support member and enables movement of the space dividing apparatus from the deployed condition to the stowed condition.

Further depression of the button (figure 14b through figure 14c) results in the ramp surfaces 134, 136 passing each other and the support element 14 returning towards the button 130 under the bias force provided by the biasing means as described above. As shown in figure 5c, return of the button through the button bias is prevented by each ramp 132, 138 ramp edge 142, 144 which engage. In some embodiments of the invention, the button is configured so that a portion of the button above the ramp edge 142 is wider than a portion of the button below the ramp 132. In other embodiments, such as the one shown in figure 13, the second support element 14 is configured so that a portion of the support element is wider (or closer to the button) below the support ramp 138 than it is above the support ramp. In either configuration, this means that once the ramp surfaces 134, 136 have passed each other, the second support member returns, via the biasing means, to a position that is offset from the deployed condition. This is exemplified in figure 14c where the deployed condition is shown by dashed line 154 and the offset position is shown by dashed line 156. Advantageously this prevents the space dividing apparatus from returning to the fully deployed position. In use this permits a user to press the button to initiate a move from the deployed position towards the stowed position before then applying force to the partition body to continue to overcome the biasing means and move the space dividing apparatus to the stowed position.

Figure 14d schematically shows the arrangement of the button 130 and the portion of the second support element 14 when the space dividing apparatus is in the stowed position according to an embodiment of the invention. As can be seen in the figure by way of comparison to figures 14a to 14c, the second support element can be considered to have rotated away from the button. That is to say, the support ramp 138 of the support element 14 no longer faces or opposes the button ramp 132 of the button 130. As the ramp edges 142, 144 no longer engage, the button returns to its presented configuration. In the embodiment schematically shown, the button is prevented from extending beyond the presented configuration by a catch 158 catching a ledge 160 provided on the second support element. The catch is biased against the ledge by the button bias 152.

It will be appreciated that the rotation away of the support element from the button is caused by the arrangement of the space dividing apparatus which sees the second support element rotate about the second coupling hinge as the apparatus transitions between the deployed and stowed conditions. In turn it will be understood that as the space dividing apparatus is moved from the stowed position to the deployed position, the button and portion of the second support element return to their aligned condition as shown in figure 14a. It follows that the ledge 160 positioned on the second support element 14 is presented to the button 130 both when the support ramp 138 faces and does not face the button ramp 132.

Figures 14a and 14d show the top of the button aligning with the top of the second support element. However, in some embodiments the button can be presented above the second support element. Other arrangements may be useful.

In some embodiments of the invention, the release button is prevented from extending beyond the presented configuration by a boss 162 positioned in the track 126, as shown in figure 12. A channel 164 in the button 130 receives the boss and a dead stop at each end of the channel prevents the button from extending beyond the presented configuration and advantageously from being depressed further than is useful to overcome the bias force.

Returning to figure 7, the base 108 comprises a raised portion 166. The raised portion is shaped to allow the support member to stow beside it when the space dividing apparatus is in the stowed position. This is illustrated through figure 9 which shows the support members 10, 10' stowing beside the raised portion 166. In some embodiments, the raised portion has a depth equal to that of the stowed support member (d10 as discussed above). In some embodiments there is a small gap formed between the raised portion 166 and the partition body 104 when the space dividing apparatus is in the stowed position. This is advantageous in allowing for manufacturing tolerances. Support for heavy objects placed on the material surface is provided by the partition body bearing on the base at the ends 114 of the partition body. In some embodiments the raised portion provides support to the partition body when the space dividing apparatus is in the stowed position. This means that heavy objects placed on the material surface do not result in a flex of the surface.

In an example embodiment the space dividing apparatus comprises a pull loop 168, attached to the partition body 104. The pull loop is provided to permit a user to urge the space dividing apparatus from the stowed position by lifting the partition body 104. In some embodiments the space dividing apparatus is releasably retained in stowed position by gravity acting on the partition body. In other embodiments a latching means is used to retain the space dividing apparatus in the stowed position.

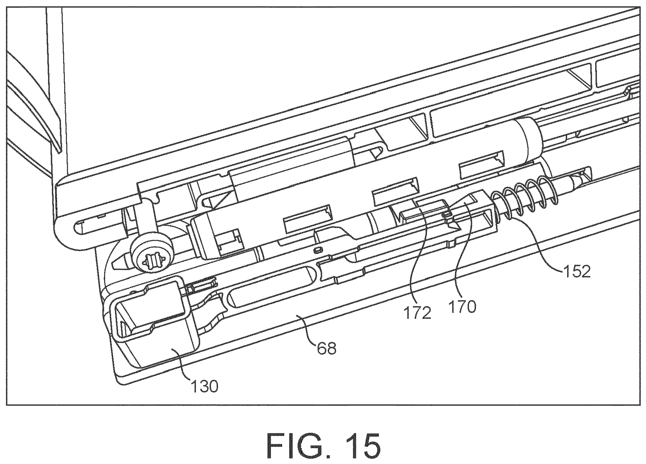

In examples comprising the latching means for retention of the space dividing apparatus in the stowed position, the release button 130 is used to releasably latch the partition body to the base. Figure 15 shows the space dividing apparatus in the stowed position with the end 114 of the partition body (as shown in other figures) removed to enable a view of the latching means. In an example, the button comprises a button latching ramp 170 configured to engage with a base latching ramp 172 in the stowed position. The latching ramps are configured so that when a user pulls on the pull loop, the ramps act to depress the button against the button bias 152. Sufficient force applied to the pull loop causes the ramps to be overcome and the space dividing apparatus to move to a part-deployed position. It follows that when stowing the space dividing apparatus, the button 130 must be depressed to overcome the latching ramps in a reverse direction to that achieved by the user pulling the pull loop. In some embodiments the latching ramps are double sided so that application of a downward force to stow the space dividing apparatus similarly acts against the button bias 152. In either example, the button bias advantageously acts to retain the space dividing apparatus in the closed position.

The first coupling portion 68, in some embodiments, comprises the base latching ramp 172. In such embodiments the first coupling portion is attached to the base 108. In other example embodiments, the base 108 comprises the base latching ramp. Other arrangements may also be useful.

It will be appreciated in the foregoing that some embodiments of the invention comprise a pair of release buttons, each positioned at the ends of the partition body and configured to engage with the respectively positioned support members. In use, a user having a deployed space dividing apparatus can choose to simultaneously press the button of both release buttons or can press one at a time before then moving the partition body to return the space dividing apparatus to the stowed condition. The button and support ramp edges as hereinbefore described prevent the support apparatuses from returning to a deployed configuration. Advantageously this can support single handed operation of the space dividing apparatus.

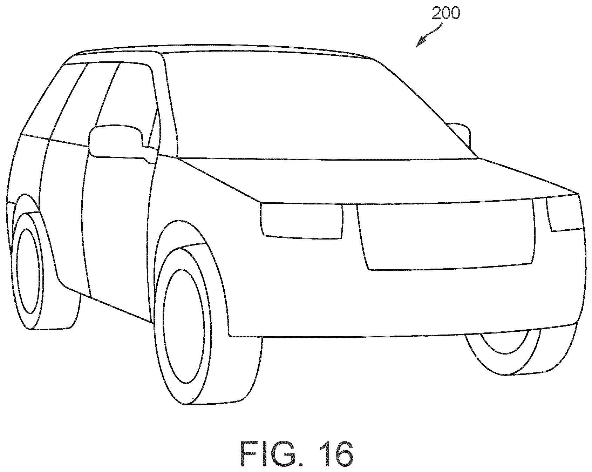

Figure 16 schematically shows a vehicle 200 comprising a space dividing apparatus or a support apparatus as hereinbefore described.

It will be appreciated that various changes and modifications can be made to the present disclosed examples without departing from the scope of the present invention as defined by the appended claims.

## Claims

1. A space dividing apparatus (100) arranged to move between a stowed position and a deployed position relative to a base (108), the space dividing apparatus (100) comprising a partition body (104) and at least one support member (10), the support member (10) comprising:
a first support element (12) having a first support element plane;
a second support element (14) having a second support element plane; and
a support hinge (22) arranged to hingeably couple the first and second support elements and having a support hinge axis (24),
wherein the support member (10) is hingeable between:
a deployed condition in which the first support element plane and the second support element plane are each substantially parallel with a first plane; and
a stowed condition in which the first support element plane and the second support element plane are each substantially parallel with a second plane,
wherein the second plane is orthogonal to the first plane, and
wherein in the stowed position the at least one support member (10) is in the stowed condition and in the deployed position the at least one support member (10) is in the deployed condition,
**characterized in that** the space dividing apparatus (100) further comprises a release button (130) configured to initiate movement of the support member (10) from the deployed condition towards the stowed condition, wherein: the release button (130) is movable along a button axis and the button comprises a button ramp (132) having a ramp surface (134); and
the second support element (14) comprises a support ramp (138) having a ramp surface (136),
wherein in the deployed position the button ramp (132) is aligned with and opposes the support ramp (138) such that movement of the button along the button axis causes the ramp surface of the button ramp to engage with the ramp surface (136) of the support ramp (138) to urge the second support element away from the button axis and away from the deployed condition.

2. A space dividing apparatus (100) as claimed in claim 1, wherein the release button (130) is biased towards a presented condition.

3. A space dividing apparatus (100) as claimed in claim 2, wherein the release button (130) comprises a catch (158) and the second support element comprises a ledge (160), and in the deployed condition the catch of the release mechanism is biased against the ledge (160).

4. A space dividing apparatus (100) as claimed in claim 3, wherein in the stowed position the support ramp (138) is out of alignment with the button ramp (132).

5. A space dividing apparatus (100) as claimed in any one of claims 1 to 4, wherein the partition body comprises a track arranged to house the release button (130).

6. A space dividing apparatus (100) as claimed in claim 5, wherein the partition body (104) comprises ends and the track is provided by the ends.

7. A space dividing apparatus (100) as claimed in any preceding claim, wherein the release button is configured to releasably latch the space dividing apparatus (100) in the stowed position.

8. A space dividing apparatus (100) as claimed in any preceding claim comprising a base (108), wherein the at least one support member is coupled to the base (108).

9. A space dividing apparatus (100) as claimed in claim 8, the release button comprising a button latching ramp (170) configured to engage with a base latching ramp (172), wherein the button is biased so that the button latching ramp (170) and the base latching ramp (172) are engaged in the stowed position.

10. A space dividing apparatus (100) as claimed in any preceding claim, wherein the space dividing apparatus (100) forms a vehicle loadspace partition.

11. A space dividing apparatus (100) as claimed in any one of claims 1 to 10, wherein the space dividing apparatus (100) forms a shelf.

12. A load floor unit comprising (100) a space dividing apparatus (100) as claimed in any of claims 1 to 10.

13. A vehicle (200) comprising a space dividing apparatus (100) as claimed in any preceding claim.

## Patentansprüche

1. Raumteilereinrichtung (100), die dazu angeordnet ist, sich zwischen einer verstauten Position und einer angewendeten Position relativ zu einer Basis (108) zu bewegen, wobei die Raumteilereinrichtung (100) einen Trennkörper (104) und mindestens ein Stützelement (10) umfasst, das Stützelement (10) umfassend:
ein erstes Stützelement (12), das eine erste Stützelementebene aufweist;
ein zweites Stützelement (14), das eine zweite Stützelementebene aufweist; und
ein Stützscharnier (22), das dazu angeordnet ist, das erste und das zweite Stützelement schwenkbar zu koppeln, und eine Stützscharnierachse (24) aufweist,
wobei das Stützelement (10) schwenkbar ist zwischen:
einem angewendeten Zustand, in dem die erste Stützelementebene und die zweite Stützelementebene jeweils im Wesentlichen parallel zu einer ersten Ebene sind; und
einem verstauten Zustand, in dem die erste Stützelementebene und die zweite Stützelementebene jeweils im Wesentlichen parallel zu einer zweiten Ebene sind,
wobei die zweite Ebene orthogonal zur ersten Ebene ist, und
wobei in der verstauten Position das mindestens eine Stützelement (10) in dem verstauten Zustand ist und in der angewendeten Position das mindestens eine Stützelement (10) in dem angewendeten Zustand ist,
**dadurch gekennzeichnet, dass** die Raumteilereinrichtung (100) ferner einen Freigabeknopf (130) umfasst, der konfiguriert ist, um eine Bewegung des Stützelements (10) aus dem angewendeten Zustand in Richtung des verstauten Zustands einzuleiten, wobei: der Freigabeknopf (130) entlang einer Knopfachse bewegbar ist und der Knopf eine Knopframpe (132) umfasst, die eine Rampenoberfläche (134) aufweist; und
das zweite Stützelement (14) eine Stützrampe (138) umfasst, die eine Rampenoberfläche (136) aufweist,
wobei in der angewendeten Position die Knopframpe (132) auf die Stützrampe (138) ausgerichtet ist und dieser gegenüberliegt, sodass eine Bewegung des Knopfes entlang der Knopfachse bewirkt, dass die Rampenoberfläche der Knopframpe mit der Rampenoberfläche (136) der Stützrampe (138) in Eingriff kommt, um das zweite Stützelement von der Knopfachse weg und von dem ausgefahrenen Zustand weg zu drängen.

2. Raumteilereinrichtung (100) nach Anspruch 1, wobei der Freigabeknopf (130) in Richtung eines präsentierten Zustands vorgespannt ist.

3. Raumteilereinrichtung (100) nach Anspruch 2, wobei der Freigabeknopf (130) eine Raste (158) umfasst und das zweite Stützelement einen Vorsprung (160) umfasst, und in dem angewendeten Zustand die Raste des Freigabemechanismus gegen den Vorsprung (160) vorgespannt ist.

4. Raumteilereinrichtung (100) nach Anspruch 3, wobei die Stützrampe (138) in der verstauten Position nicht auf die Knopframpe (132) ausgerichtet ist.

5. Raumteilereinrichtung (100) nach einem der Ansprüche 1 bis 4, wobei der Trennkörper eine Schiene umfasst, die zur Aufnahme des Freigabeknopfes (130) angeordnet ist.

6. Raumteilereinrichtung (100) nach Anspruch 5, wobei der Trennkörper (104) Enden umfasst und die Schiene durch die Enden bereitgestellt wird.

7. Raumteilereinrichtung (100) nach einem der vorstehenden Ansprüche, wobei der Freigabeknopf konfiguriert ist, um die Raumteilereinrichtung (100) in der verstauten Position lösbar zu verriegeln.

8. Raumteilereinrichtung (100) nach einem der vorstehenden Ansprüche, umfassend eine Basis (108), wobei das mindestens eine Stützelement an die Basis (108) gekoppelt ist.

9. Raumteilereinrichtung (100) nach Anspruch 8, wobei der Freigabeknopf eine Knopfverriegelungsrampe (170) umfasst, die konfiguriert ist, um mit einer Basisverriegelungsrampe (172) in Eingriff zu kommen, wobei der Knopf so vorgespannt ist, dass die Knopfverriegelungsrampe (170) und die Basisverriegelungsrampe (172) in der verstauten Position in Eingriff stehen.

10. Raumteilereinrichtung (100) nach einem der vorstehenden Ansprüche, wobei die Raumteilereinrichtung (100) eine Fahrzeugladeraumtrennung bildet.

11. Raumteilereinrichtung (100) nach einem der Ansprüche 1 bis 10, wobei die Raumteilereinrichtung (100) ein Regal bildet.

12. Ladebodeneinheit, umfassend (100) eine Raumteilereinrichtung (100) nach einem der Ansprüche 1 bis 10.

13. Fahrzeug (200), umfassend eine Raumteilereinrichtung (100) nach einem der vorstehenden Ansprüche.

## Revendications

1. Appareil de division d'espace (100) agencé pour se déplacer entre une position rangée et une position déployée par rapport à une base (108), l'appareil de division d'espace (100) comprenant un corps de séparation (104) et au moins un organe de support (10), l'organe de support (10) comprenant :
un premier élément de support (12) ayant un plan de premier élément de support ;
un second élément de support (14) ayant un plan de second élément de support ; et
une articulation de support (22) agencée pour accoupler de manière articulée les premier et second éléments de support et ayant un axe d'articulation de support (24),
dans lequel l'organe de support (10) peut être articulé entre :
un état déployé dans lequel le plan de premier élément de support et le plan de second élément de support sont chacun sensiblement parallèles à un premier plan ; et
un état rangé dans lequel le plan de premier élément de support et le plan de second élément de support sont chacun sensiblement parallèles à un second plan,
dans lequel le second plan est orthogonal au premier plan, et
dans lequel, dans la position rangée, l'au moins un organe de support (10) est dans l'état rangé et, dans la position déployée, l'au moins un organe de support (10) est dans l'état déployé,
**caractérisé en ce que** l'appareil de division d'espace (100) comprend en outre un bouton de libération (130) conçu pour initier le mouvement de l'organe de support (10) de l'état déployé vers l'état rangé, dans lequel : le bouton de libération (130) peut se déplacer le long d'un axe de bouton et le bouton comprend une rampe de bouton (132) ayant une surface de rampe (134) ; et
le second élément de support (14) comprend une rampe de support (138) ayant une surface de rampe (136),
dans lequel, dans la position déployée, la rampe de bouton (132) est alignée avec la rampe de support (138) et opposée à celle-ci de sorte que le mouvement du bouton le long de l'axe de bouton amène la surface de rampe de la rampe de bouton à venir en prise avec la surface de rampe (136) de la rampe de support (138) pour éloigner le second élément de support de l'axe de bouton et de l'état déployé.

2. Appareil de division d'espace (100) selon la revendication 1, dans lequel le bouton de libération (130) est sollicité vers un état présenté.

3. Appareil de division d'espace (100) selon la revendication 2, dans lequel le bouton de libération (130) comprend un loquet (158) et le second élément de support comprend un rebord (160), et, dans l'état déployé, le loquet du mécanisme de libération est sollicité contre le rebord (160).

4. Appareil de division d'espace (100) selon la revendication 3, dans lequel, dans la position rangée, la rampe de support (138) n'est pas alignée avec la rampe de bouton (132).

5. Appareil de division d'espace (100) selon l'une quelconque des revendications 1 à 4, dans lequel le corps de séparation comprend un rail agencé pour loger le bouton de libération (130).

6. Appareil de division d'espace (100) selon la revendication 5, dans lequel le corps de séparation (104) comprend des extrémités et le rail est fourni par les extrémités.

7. Appareil de division d'espace (100) selon l'une quelconque revendication précédente, dans lequel le bouton de libération est conçu pour verrouiller de manière libérable l'appareil de division d'espace (100) dans la position rangée.

8. Appareil de division d'espace (100) selon l'une quelconque revendication précédente, comprenant une base (108), dans lequel l'au moins un élément de support est accouplé à la base (108).

9. Appareil de division d'espace (100) selon la revendication 8, le bouton de libération comprenant une rampe de verrouillage de bouton (170) conçue pour venir en prise avec une rampe de verrouillage de base (172), dans lequel le bouton est sollicité de sorte que la rampe de verrouillage de bouton (170) et la rampe de verrouillage de base (172) sont en prise dans la position rangée.

10. Appareil de division d'espace (100) selon l'une quelconque revendication précédente, dans lequel l'appareil de division d'espace (100) forme une cloison d'espace de chargement de véhicule.

11. Appareil de division d'espace (100) selon l'une quelconque des revendications 1 à 10, dans lequel l'appareil de division d'espace (100) forme une étagère.

12. Unité de plancher de chargement comprenant (100) un appareil de division d'espace (100) selon l'une quelconque des revendications 1 à 10.

13. Véhicule (200) comprenant un appareil de division d'espace (100) selon l'une quelconque revendication précédente.
